# EUROPEAN PATENT SPECIFICATION

(11) **EP 4 163 096 B1**
(45) Date of publication and mention of the grant of the patent: **23.04.2025**
(21) Application number: 21201710.7
(22) Date of filing: 08.10.2021
(51) Int. Cl.: B29D 30/48, B60C 15/04, B60C 15/06

(54) **A TIRE COMPRISING A DROP SHAPED BEAD CORE AND METHOD FOR THE MANUFACTURE**
REIFEN MIT EINEM TROPFENFÖRMIGEN WULSTKERN UND VERFAHREN ZUR HERSTELLUNG
PNEUMATIQUE COMPRENANT UNE TRINGLE EN FORME DE GOUTTE ET PROCÉDÉ DE MANUFACTURE

(43) Date of publication of application: 12.04.2023
(73) Proprietor: Nokian Renkaat Oyj, 37101 Nokia (FI)
(72) Inventor: KINNUNEN, Ville, 37101 Nokia (FI)
(74) Representative: Berggren Oy

(56) References cited:
- EP-A1- 3 670 167
- EP-A1- 4 296 093
- EP-A2- 0 884 169
- WO-A1-2014/052160
- WO-A1-2016/099881
- WO-A1-2020/004111
- DE-A1- 102007 018 971
- DE-A1- 2 360 731
- DE-A1- 3 642 291
- DE-U1- 202004 020 591

## Description

### Technical field

The invention relates to a pneumatic tire. The invention further relates to a method for manufacturing a pneumatic tire.

### Background

A pneumatic tire typically comprises sidewalls, a pair of beads, and a tread, which tread is designed to provide a running surface of the tire for ground-contacting purposes.

Each bead of a tire normally includes at least one rubber component having a tire mounting surface, for example a chafer/toe guard component, which is designed to be rim-contacting, and therefore a mounting surface of the tire. Thus, the wheel-rim mounting surface is conventionally provided in the bead of the tire, which is designed to contact a rigid metal rim onto which the tire is mounted to create a tire-wheel assembly.

WO 2016/099881 A1 discloses a bead filler. DE 23 60 731 A1 discloses hollow spaces in a tire. EP 3670 167 A1 discloses a composite apex. WO 2020 004111 A1 discloses a run-flat tire provided with a pair of bead cores. EP 4 296 093 A1, which belongs to the state of the art according to Article-54(3) EPC, discloses a pneumatic tire comprising a bead core.

However, there is still a need to provide an improved pneumatic tire.

### Summary

This invention relates to a pneumatic tire. The invention further relates to a method for manufacturing a pneumatic tire.

Aspects of the invention are characterized by what is stated in the independent claims. Some preferred embodiments are disclosed in the dependent claims.

These and other embodiments are disclosed in the description and figures.

The pneumatic tire can comprise a tread, sidewalls, and a first bead and a second bead, which beads are spaced apart. The first bead can have a first mounting surface, and the second bead can have a second mounting surface, which mounting surfaces can be adapted for mounting the tire on a rim of a wheel.

Each bead can comprise
- a drop shaped bead core, the drop shaped bead core having a cross sectional area comprising a circular portion and a tapering portion, and
- an apex positioned adjacent and/or against the bead core.

Thanks to the novel solution, the bead may not break easily. Further, the tire may provide an excellent air sealing performance without substantially affecting other properties of the tire. Still further, stability of the bead may be improved. Moreover, easiness of handling of the tire may be improved.

The term "drop shaped bead core" refers to a bead core having a cross sectional area comprising a circular portion and a tapering portion.

The tapering portion of the drop shaped core may extend radially outwardly from the main portion of the drop shaped core. Thus, the tapering portion of the drop shaped core may extend outwardly from the main portion of the drop shaped core in a radial direction. Therefore, stability of the bead may be improved. Furthermore, handling properties of the tire may be improved.

The apex can be connected, at least, to one side of the tapering portion of the bead core. The apex can be connected to one or both sides of the tapering portion of the bead core. Thus, the tire may provide an excellent air sealing performance without substantially affecting other properties of the tire.

The apex can be attached, at least, to an inner side of the tapering portion of the bead core. Thanks to this embodiment, easiness of the manufacturing process may be improved. Furthermore, quality of the bead region may be improved.

Alternative, or in addition to the inner side, the apex can be attached to an outer side of the tapering portion of the bead core.

The shape of the apex may be adapted to the shape of the tapering portion of the bead core. The apex may have an approximately triangular cross section, particularly if the apex is attached to only one side of the tapering portion of the bead core. Alternatively, the apex may have a cross sectional shape having, for example, two approximately triangular portions. In this embodiment, the apex may be attached to both sides of the tapering portion of the bead core. By adapting the shape of the apex to the shape of the bead core, stability and handling properties of the bead may be improved.

The bead core can have a cross sectional area in a range between 10 mm² and 100 mm². Strength properties of the bead may be improved along with an increased cross sectional area of the bead core.

The bead core can have a core height in a range between 4.5 mm and 15 mm, determined as a maximum height of the cross sectional area of the bead core. Thanks to said height, stiffness properties of the tire may be improved, providing improved mounting surface for the pneumatic tire. Further, thanks to the novel solution, tire-wheel assembly may be improved so that a rim may easily support and seal the tire to a wheel, hence, a sealing between the tire and a rim may be improved.

The bead core can have a core width in a range between 4 mm and 10 mm, determined as a maximum width of the cross sectional area of the bead core. Said width may improve strength of the bead as well as improve properties of the tire mounting surface of the pneumatic tire.

In an embodiment, the core width of the bead core is equal to or less than 0.8 times core height of the bead core, determined from the cross sectional area of the bead core. This may improve stiffness of the bead. Further, tire-wheel assembly may be improved so that a rim may easily support and seal the tire to a wheel.

A cross sectional area of the apex can be in a range between 15 mm² and 350 mm². With the greater cross sectional area of the apex it is possible to improve stiffness properties of the bead. Further, handling of the tire may be improved.

Furthermore, the smaller area may improve comfortability of the ride.

A height of the apex, determined as a maximum height of the cross sectional area of the apex, can be in a range between 5 mm and 75 mm, preferably in a range between 10 mm and 60 mm. Said height of the apex may improve stiffness of the bead without affecting too much other properties of the tire. Further, handling of the tire may be improved with the greater height. Furthermore, comfort of the tire may be improved with the smaller height, hence, providing more comfortable ride.

A width of the apex can be in a range between 5 mm and 15 mm, determined as a maximum width of the cross sectional area of the apex. Said width may provide improved stiffness properties of the bead. Further, said width may provide suitable contact area between the apex and the core, improving some properties of the bead.

In an embodiment, the bead core comprises metal wires arranged side-by-side with respect to one another.

The bead core may comprise a wire having a diameter in a range between 0.5 mm and 2 mm. This kind of wire may be used in order to improve stiffness properties of the bead. Further, a wire having a diameter of at least 0.8 mm may not need to be wrapped as many times as smaller wires.

The apex can be made of materials having suitable properties for the apex. The apex comprises a rubber and further comprises a resin to improve hardness of the apex. In an embodiment, Shore A hardness of the apex is in a range between 86 and 99 measured according to standard ASTM D2240. Hardness of the apex may be, e.g., 5 to 50% greater, preferably from 20% to 47% greater, than hardness of an adjacent rubber, such as carcass rubber. Thanks to said hardness, handling / controlling of the tire may be substantially improved.

An assembly comprising the bead core and the apex can have a drop shaped cross sectional area. Thus, the tire may provide an excellent air sealing performance without substantially affecting other properties of the tire.

Thanks to the novel solution, tire-wheel assembly may be improved so that a rim may easily support and seal the tire to a wheel. Therefore, a sealing between the tire and a rim may be improved. Further, thanks to the novel solution, it is possible to improve comfortability of the ride. Further, thanks to the structure of the bead core and the apex, the bead may not break easily. Thus, a tire having an improved strength can be obtained.

Further, thanks to the present solution, it is possible to provide excellent air sealing performance without substantially affecting other properties of the tire. Furthermore, the novel solution may be easily added to the conventional manufacturing process of tires.

The novel bead structure having the drop shaped bead core may substantially improve stiffness of the bead as well as stability of the bead and, hence, improve handling properties of the tire.

### Brief description of the drawings

- Fig. 1: illustrates an example of a tire,
- Fig. 2: illustrates, in a half cross section, an example of a tire,
- Fig. 3a-h: illustrate, in half cross sections, examples of a bead, and
- Fig. 4: shows results from experimental tests.

The Figures are intended to illustrate the general principles of the disclosed solution. Therefore, the illustrations in the Figures are not necessarily in scale or suggestive of precise layout of system components.

### Detailed description

In the text, references are made to the Figures with the following numerals and denotations:
- 10: bead core,
- 10a: main portion of the bead core,
- 10b: tapering portion of the bead core,
- 10L: height of the bead core,
- 10W: width of the bead core,
- A10: cross sectional area of the bead core,
- 11: inner side of the bead core,
- 12: outer side of the bead core,
- 20: apex,
- A20: cross sectional area of the apex,
- 20L: height of the apex,
- 20W: width of the apex,
- 100: tire,
- 120: tread of tire,
- 130: inner surface of tire,
- 135: innerliner,
- 140: circumferential belt layer,
- 145: outer sidewall,
- 150: bead,
- 151: first bead,
- 152: second bead,
- 155: carcass ply,
- AXR: axis of rotation of tire,
- SC: circumferential direction, and
- SR: radial direction.

In this specification term "comprising" may be used as an open term, but it also comprises the closed term "consisting of".

For the purpose of the present description and the claims, unless otherwise indicated, all ranges include any combination of the maximum and minimum points disclosed and include any intermediate ranges therein, which may or may not be specifically enumerated herein.

In this specification, the term "phr" relates to parts by weight of an ingredient per 100 parts by weight of rubber, unless otherwise indicated.

The term "bead core" is known by a person skilled in the art. The bead core 10 can be positioned in a bead 150.

The bead core 10 may have a structure wherein a cross section of the bead core has components axially arranged side-by-side with respect to one another so as to form the bead core.

As discussed, the term "drop shaped bead core" refers to a bead core having a cross sectional area comprising a circular portion and a tapering portion.

The term "apex" is known by a person skilled in the art. The apex may be positioned, at least partly, radially outward of a bead core.

Unless otherwise indicated, the terms "rubber" and "vulcanized rubbers" refer to a polymer compound, which is made by vulcanizing rubber.

Hardness can be determined according to ASTM standard D2240-15 reapproved 2021.

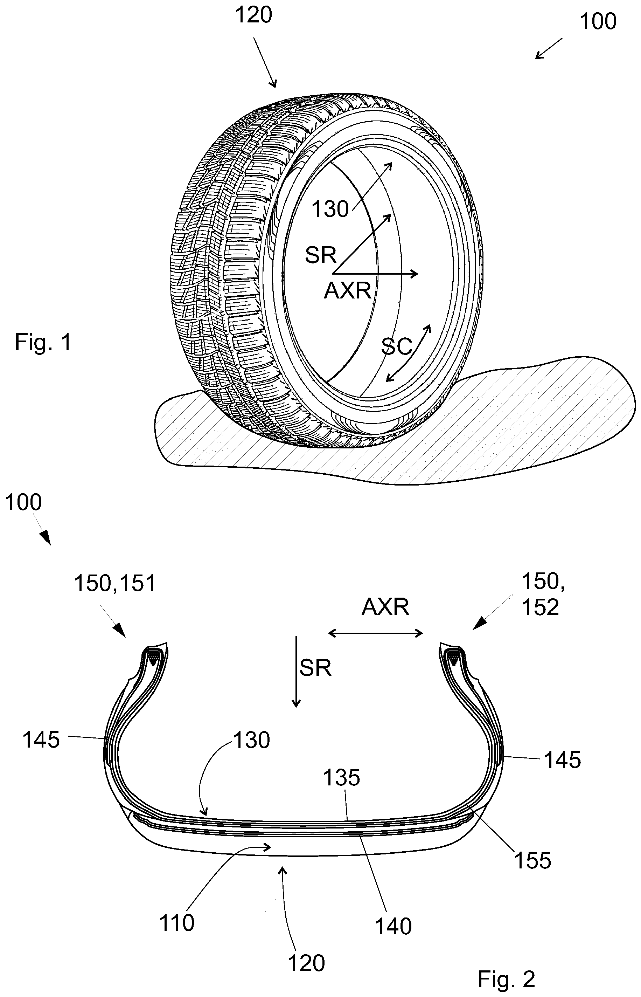

Figures 1-4b disclose a tire, or at least a part of a tire.

The tire 100 can be a pneumatic tire. Such a tire may be, for example, a tire for a passenger motor vehicle, such as a passenger car or a motorcycle. Such a tire 100 may be, for example, a so-called heavy tire, for a heavy machine such as a truck, a caterpillar, a harvester, or a front loader. As is known, such a tire 100 may rotate around an axis of rotation AXR.

Such a tire 100 typically comprises a tread 120, which is in contact with a surface such as a road surface during the normal use of the tire 100. Such a tread 120 typically comprises a tread pattern which comprises a plurality of tread blocks. The tread rubber can be disposed radially outside the belt layer 140 to form the tread portion.

The tread can be configured to form a contact with a surface when the tire 100 is used. Typically, the contact patches of the tires 100 of the motor vehicle are the only connections between the road and the motor vehicle.

The tire can comprise a reinforcing belt, i.e., circumferential belt layer 140, which is arranged between the inner surface of the tire 130 and the tread 120. Since the purpose of the reinforcing belt is to reinforce the tire, preferably, the reinforcing belt does not limit large apertures. More precisely, preferably, the reinforcing belt does not limit an aperture having an area of at least 0.5 cm².

The circumferential belt layer 140 can comprise metal. The circumferential belt layer 140 may comprise steel, or it may consist of steel. The circumferential belt layer 140 may be a wire like structure arranged inside the tire 100. The reinforcing structure of the circumferential belt layer 140 may comprise a steel mesh. In addition, or alternatively, the circumferential belt layer 140 may comprise fibrous material. The fibrous material of the circumferential belt layer 140 may comprise at least one of cotton, rayon, polyamide (Nylon), polyester, polyethylene terephthalate, and poly-paraphenylene terephthalamide (Kevlar).

The body of the tire 100 is typically made of layers of different fabrics, which are called plies. In this application, the term "ply" refers to a material layer, typically a textile layer, used in the tire. The tire typically comprises several layers of plies. Plies can give strength to the tire and improve a resistance of the tire to road damage. Passenger tires typically have two body plies, truck tires have typically several body plies. The body plies typically run from the first bead to the second bead. Ply fabric can be made of e.g. polyester. The plies can be coated with rubber to seal the tire and to bond the layers with each other.

The tire can comprise a carcass ply 155. The carcass ply 155 can improve the strength of the tire, particularly in the sidewall areas 145. The carcass ply 155 can be a rubber-coated fabric. The carcass ply typically extends from the first bead to the second bead. The tire can comprise one or more than one carcass ply 155. The purpose of the carcass ply 155 can be to reinforce the tire 100, hence, the carcass ply 155 can give strength to the tire.

The carcass ply/plies 155 may comprise fibrous material. The fibrous material of the carcass ply 155 can comprise
- cotton, and/or
- rayon, and/or
- polyamide (Nylon), and/or
- polyester, and/or
- polyethylene terephthalate, and/or
- Poly-paraphenylene terephthalamide (Kevlar).

The tire 100 further comprises an outer sidewall 145. The outer sidewall 145 of the tire can be used to protect the side of the tire e.g. from the road. The outer visible tire sidewalls 145 can be of a rubber composition.

The tire may further comprise an inner liner 135, which inner liner 135 of the tire is typically an airtight layer of rubber.

Thus, as discussed above, the tire can comprise
- a circumferential tread 120 which is being configured to form a contact with a surface when the tire 100 is used,
- a circumferential belt layer 140 disposed radially below the tread 120,
- a first bead 151 and a second bead 152, which beads are spaced apart, wherein the first bead 151 has a first mounting surface and the second bead 152 has a second mounting surface, which mounting surfaces are adapted for mounting the tire on a rim of a wheel,
- a first sidewall extending between the first bead 151 and the tread 120 and a second sidewall extending between the second bead 152 and the tread 120, and
- a carcass ply 155 extending between the first bead 151 and the second bead 152.

### Bead

The tire has a first bead 151 and a second bead 152, which beads 151, 152 are spaced apart. In this application, the term "bead" refers to the first bead and the second bead.

The rubber compositions of the tire bead 150, 151, 152 can provide a mounting surface of the tire where said mounting surface is adapted to contact a metal rim to form a tire - rim assembly. The first bead 151 can have a first mounting surface and the second bead 152 can have a second mounting surface. The mounting surfaces are adapted for mounting the tire on a rim of a wheel. The beads have suitable strength to stay seated on the rim of a wheel.

The tire bead may need to have a specific strength, stiffness, and flexibility.

The bead comprises the bead core 10 and the apex 20. The bead may need to have sufficient geometrical stability and torsional strength to withstand the stresses exerted onto the bead core during vulcanization and molding steps of the green tire and, afterwards, during the use of the tire. Further, the bead may need to allow mounting and dismounting from the wheel rim to be carried out.

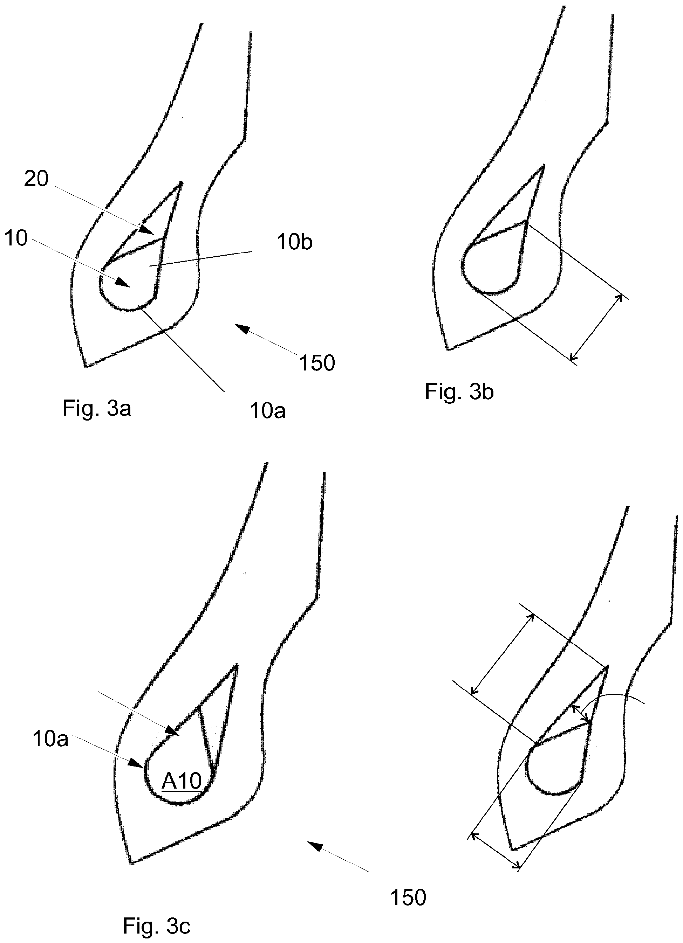

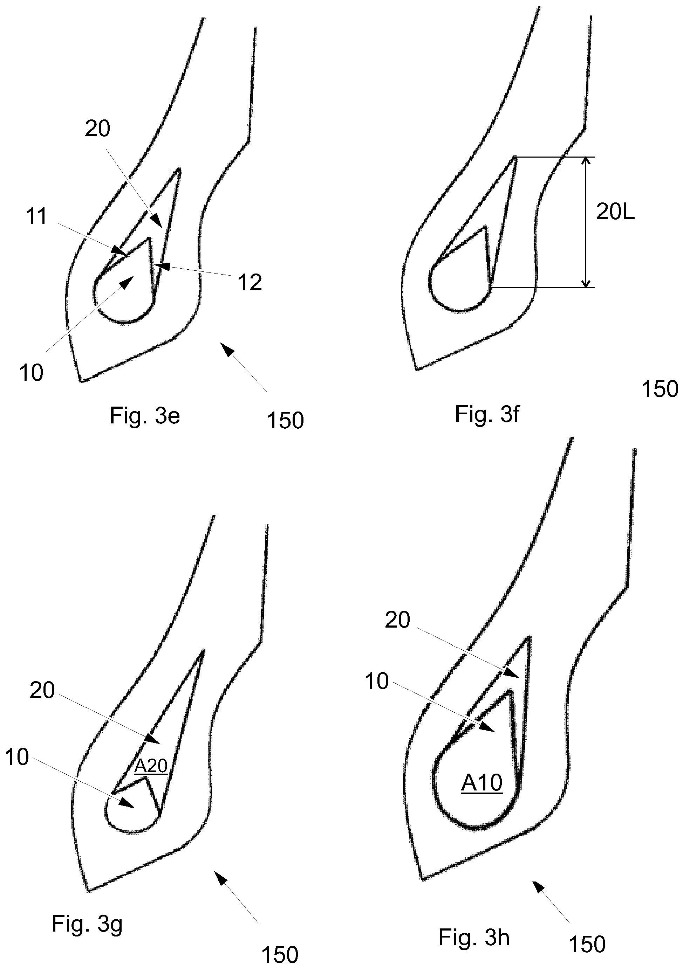

Figs 3a-3h illustrates some embodiments of bead assemblies comprising the bead core and the apex.

The bead 150 can comprise the drop shaped bead core (referring to a shape of the bead core having a cross sectional area comprising a circular portion and a tapering portion) and an apex that may be connected to one side or two sides of the bead core. Thanks to the novel solution, good adhesion between the bead core 10, the apex 20 and surrounding elastomeric material may be obtained.

Thus, the bead 150 may comprise an assembly comprising
1) the bead core 10, and
2) the apex 20.

The apex 20 may be a filler of elastomeric material. The tire bead assembly can provide a smooth transition between the beads and the adjacent side walls of the tire.

The bead core 10 may, together with the apex 20, improve stability of the sidewall and the bead area of the tire. The apex 20 may further provide an elastic material layer between the rigid bead core and a flexible inner liner and body ply.

The apex may be positioned against the bead core. The novel solution may improve an adhesion between the bead core and the elastomeric material around the bead core.

Thus, the bead 150, 151, 152 can comprise a drop shaped bead core 10, the cross sectional area of the drop shaped bead core 10 having a circular portion 10a and a tapering portion 10b. The tapering portion 10b of the drop shaped core 10 may extend radially outwardly from the main portion 10a. The bead can further comprise an apex 20 positioned adjacent and/or against the bead core.

Further, the bead assembly can comprise the drop shaped bead core and the apex, wherein the bead assembly can have a cross sectional shape having a circular portion a tapering portion.

Thanks to the shape of the assembly comprising the bead core and the apex, local stresses at a time of deformation of bead can be decreased. Further, thanks to the assembly, noise performance of the tire may be improved. Further, because the bead 150 has the bead core having the shape of a drop and the assembly further comprises a tapering portion formed at least partly by the apex, ride comfortability can be improved.

### Bead core

The bead core 10 may serve as anchorage for the carcass ply (or plies). The bead core may further withstand forces under an effect of inflation pressure as well as deformations resulting from a use of the tire.

The bead core can be inflexible and inelastic structure, which may provide mechanical strength. The bead core is formed by using wire(s). The wire may be a metal wire. Said wire(s) may form bundles which may be axially arranged side-by-side with respect to one another.

The tire may have a strap bead, a single wire bead, or a cable bead. The bead may be constructed e.g. by wrapping a bead wire into a bundle. The bead core according to this specification is preferably the single wire bead.

The single wire bead may be obtained by wrapping a single strand of a bead wire into a bundle of a predetermined cross sectional shape. A single bead wire may be wrapped in a range between 7 and 394 times so that it forms the drop shaped bead. The number of turns that the bead wire is wound is preferably in a range between 19 and 58 in order to provide the drop shaped bead core. A single wire bead having said cross sectional shape may have very good strength properties. The single wire may be a rubber-coated bead wire.

Single wire diameter may be in a range between 0.5 mm and 2 mm, preferably in a range between 0.6 mm and 1.8 mm, more preferably in a range between 0.7 mm and 1.6 mm, and most preferably in a range between 0.8 mm and 1.5 mm. Said single wire diameter may improve tire handling properties and bead unseating results.

The bead wire may be coated with alloys of bronze and/or brass. The coating may protect metal, such as a steel, from corrosion. The bead wire is preferably a single strand of rubber coated bead wire.

As discussed, the bead core 10 may have an approximately drop shaped cross section. Thus, the cross-sectional shape of the bead core can be defined as a shape of a drop having a circular portion and a tapering portion. Therefore, the bead core 10 may have a circular portion 10a and a tapering portion 10b (shown e.g. in Fig. 3c).

The bead core may be constructed e.g. by wrapping a bead wire into a bundle. The cross sectional shape of the bead core may have said bundles axially arranged side-by-side with respect to one another so as to form the drop shaped bead core.

The main portion 10a of the bead core may have approximately spherical cross section, wherefrom the bead core may extend in a tapered manner to form the tapering portion 10b. The tapering portion 10b of the bead core can be continuous with the main part 10a of the bead core, and it may extend radially outwardly therefrom.

The bead core 10 may have a maximum core height 10L in a range between 4 mm and 15 mm, preferably in a range between 5 mm and 14 mm, more preferably in a range between 6 mm and 13 mm, and most preferably in a range between 7 mm and 12 mm, determined as a maximum height of the cross sectional area of the bead core. Thus, stiffness properties of the bead may be improved, providing improved mounting surface for the pneumatic tire. Maximum width 10W of the bead core 10 can be in a range between 4 mm and 10mm, preferably in a range between 5 mm and 9 mm, more preferably in a range between 5.5 mm and 8.5 mm, and most preferably in a range between 6 mm and 8 mm, determined as a maximum width of the cross sectional area of the bead core. The technical effect is that strength properties of the bead may be improved while providing good stiffness for the tire.

Preferably, the bead core has both, the above-mentioned core height, and the above-mentioned core width.

The bead core may have a cross sectional area A10 in a range between 10 mm² and 100 mm², preferably in a range between 20 mm² and 90 mm², and most preferably in a range between 30 mm² and 80 mm². Strength properties of the bead may be improved with a greater cross sectional area of the bead core. Further, stiffness properties of the bead may be improved. Further, a sealing between the tire and a rim may be improved, hence, tire may be sealed firmly to a wheel. Thus, tire-wheel assembly may be improved so that a rim may easily support and seal the tire to a wheel. Further, thickness of a bead having said cross sectional bead core area may be suitable for e.g. passenger cars.

Said core height together with the core width and the cross sectional area of the drop shaped bead core may improve tire handling and bead unseating results.

The core width 10W of the bead core 10 may be equal to or less than a core height 10L of the bead core. Preferably, the core width 10W of the bead core 10 is equal to or less than 0.9 times the core height 10L of the bead core, more preferably equal to or less than 0.8 times the core height, and most preferably equal to or less than 0.7 times the core height, determined from the cross sectional area of the bead core. This may improve stiffness properties of the bead. Further, tire-wheel assembly may be improved so that a rim may easily support the tire and seal the tire to a wheel.

### Apex

The bead 150 comprises the apex 20, which may be positioned against the bead core. This kind of assembly comprising the bead core and the apex may improve tire handling properties. Further, said assembly having the drop shaped bead core, and the apex, may reduce stiffness differences in the bead.

The apex 20 may be positioned adjacent to the bead core 10. The shape of the apex may be adapted for positioning the apex against the bead core. The apex 20 may extend axially away from the bead core in the radial direction of the tire.

The apex may be in a position radially external to the bead core. The apex may have a substantially triangular cross-section as shown in Figs 3a-3d. Thus, the apex may have a tapered sectional form. Alternatively, the apex may have a cross-section comprising two triangular portions, as shown in Figs 3eh. Therefore, the apex may surround a part of the bead core.

Thus, the cross-sectional shape of the apex 20 may be defined as a triangle or a polygon.

A height 20L of the apex, determined as a maximum height of the cross sectional area of the apex, can be in a range between 5 mm and 75 mm, preferably in a range between 10 mm and 70 mm, more preferably in a range between 15 mm and 65 mm, and most preferably in a range between 20 mm and 60 mm. Said height of the apex may improve stiffness of the bead without affecting too much other properties of the tire. Handling of the tire may be improved with greater height. Further, comfort of the tire may be improved with smaller height, hence, providing more comfortable ride.

A width 20W of the apex can be in a range between 5 mm and 15 mm, preferably in a range between 6 mm and 12 mm, more preferably in a range between 6.5 mm and 10 mm, and most preferably in a range between 7 mm and 9 mm, determined as a maximum width of the cross sectional area of the apex. Said width may provide improved stiffness of the bead. Further, said width may provide suitable contact area between the apex and the core, improving some properties of the bead.

A cross sectional area of the apex can be in a range between 15 mm² and 350 mm², preferably in a range between 35 mm² and 300 mm², more preferably in a range between 50 mm² and 250 mm², and most preferably in a range between 60 mm² and 200 mm². With a greater cross sectional area of the apex it is possible to improve stiffness properties of the bead. Further, handling of the tire may be improved. Furthermore, a smaller height may improve comfortability of the ride.

The above mentioned height together with said width and said area may particularly improve tire handling properties of the tire.

As discussed, the apex 20 may have an approximately triangular cross section. Alternatively, the cross section of the apex 20 may have a shape of a polygon, which polygon may comprise or consist of two approximately triangular portions (shown e.g. in Figs 3e-h).

The apex 20 may comprise a main portion and a tapering portion, which tapering portion may extend in a tapered manner from the main portion. The tapering portion can be continuous with the apex main portion.

The apex 20 may comprise or consist of elastomeric material. Thus, the apex can be made from an elastic material. The apex may comprise, or mainly comprise, for example, a mixture of a rubber and a carbon black.

The apex may further comprise e.g. resin to improve hardness of the apex. Shore A hardness value of the apex may be in a range between 87 and 99 measured according to standard ASTM D2240. Thanks to said hardness, handling / controlling of the tire may be substantially improved.

The apex may comprise:
- rubber, such as natural rubber, for example 40 to 60 wt.%, and
- carbon black, for example 30 to 40 wt.%.

Thus, it is possible to obtain the predetermined hardness for the apex.

The apex may further comprise, in addition to the rubber and the carbon black:
- resin, such as phenolic resin, for example 2 to 6 wt.%, and/or
- methylene-donor, such as hexamethylenetetramine (HMT), for example 0.2 to 1.0 wt.%

Thus, easiness of controlling tire properties may be improved. Further, unseating properties of the tire may be improved.

In an advantageous embodiment, in order to improve handling of the tire and, further, to improve controllability of some tire properties, the apex comprises
- rubber, such as natural rubber, for example 40 to 60 wt.%,
- carbon black, for example 30 to 40 wt.%,
- resin, such as phenolic resin, for example 2 to 6 wt.%, and
- methylene-donor, such as methylene-donor HMT**,** for example 0.2 to 1.0 wt. %

Thanks to this embodiment, lateral stiffness of the apex may be substantially improved.

Thus, the apex may be made of harder material than a surrounding elastic material to optimize a rubber hardness balance. Shore A hardness of the apex may be, for example, 5 to 55% greater, preferably from 10% to 50% greater, and most preferably 20 to 50 % greater than hardness of a surrounding rubber, such as carcass rubber.

### Assembly

An assembly (10,20) comprising the bead core and the apex (shown in Figs 3a-h) may have a cross sectional area having a circular portion and a tapering portion. Said assembly may improve tire handling properties. The tapering portion of the assembly can extend radially outwardly from the circular portion of the assembly.

The assembly 10,20 may have a maximum length in a range between 6 mm and 85 mm, preferably in a range between 15mm and 75 mm, more preferably in a range between 20 mm and 70 mm, and most preferably in a range between 30 mm and 60 mm, determined from the cross sectional area of the assembly. The greater the length of the assembly is, the better the durability of the bead may be. The inner structure of the bead may be improved if the assembly has a length of at least 15 mm, preferably at least 20 mm, determined from the cross sectional area of the assembly.

Preferably, the assembly has a maximum width of equal to or more than 5 mm, determined from the cross sectional area of the assembly. Thus, the strength of the bead may be improved. Further, a maximum width of the assembly may be equal to or less than 15 mm, determined from the cross sectional area of the assembly. This may decrease manufacturing costs of the tire as well as improve the inner structure of the bead.

Figs 3a-3d illustrates an apex that is positioned directly on one side of the drop shaped bead core.

The apex can be positioned on the inner side 11 of the drop shaped bead core. Figs 3a, 3b, and 3d illustrate an apex that is positioned directly on the inner side 11 of the drop shaped bead core.

The apex can be positioned on the outer side 12 of the drop shaped bead core. Fig. 3c illustrates an apex that is connected on the outer side 12 of the drop shaped bead core.

Thus, the apex 20 may be connected on one side of the drop shaped core 10. In this embodiment, the apex can extend radially away from the drop shaped bead core.

In an embodiment, the apex is connected to the inner side 11 of the drop shaped bead core, as shown e.g. in Fig. 3a. In an embodiment, the apex is connected to the outer side 12 of the drop shaped bead core, as shown e.g. in Fig. 3c. With these embodiments, the apex may have substantially triangular cross section. Thus, in an embodiment, the apex has a triangular, or substantially triangular, cross section. This has an effect on contact area between the apex and the core. Further, this may have an effect on stiffness properties of the bead.

Figs 3e-3f illustrate embodiments having an apex that is directly connected to both sides of the tapering portion of the drop shaped bead core. These figures illustrate apexes having different sizes.

The apex may be connected symmetrically to said both sides of the tapering portion of the drop shaped bead core. Alternatively, the apex of these embodiments may be connected asymmetrically to the sides of the drop shaped bead core. In these embodiments, the apex may have a cross sectional shape comprising two triangular, or substantially triangular, portions.

Thus, the apex may have a cross sectional shape comprising or consisting of one or two triangular, or substantially triangular, portions.

### Process for producing a bead of a pneumatic tire

The tire of this invention can be conventionally shaped, built, molded, and cured by methods known to a person skilled in the art.

In an embodiment, the bead core is constructed by wrapping a single strand of rubber coated bead wire into a bundle. The number of wounded single wires may change only one at time between the layers of the bead. For example, if there are 4 wounded wires in the bottom layer, on the next layer there can be 5 wires. The layer wherein the bead reaches the maximum amount of single wires may not be a bottom layer or a top layer. Furthermore, the top layer may comprise e.g. 2 wires.

When the bead core is ready, a pre-formed apex can be connected to the bead core with a machine. Thus, the bead assembly can be preassembled from the bead core and the apex. The apex can be, for example, an extruded strip. The tire can be pre-formed, and the assembly can be combined to a tire carcass. Finally, the tire can be vulcanized, e.g., in a curing press.

A method for manufacturing a pneumatic tire can comprise the following steps:
- connecting a preformed apex to a bead core, thereby forming an assembly comprising the bead core and the apex,
- preforming a tire comprising said assembly, and
- vulcanizing the preformed tire, thereby obtaining the tire.

Thanks to the drop shaped bead core, stiffness of the tire may be improved. Further, thanks to the drop shaped assembly, it may be possible to improve handling of the tire.

### Example

Tires having an apex and a drop shaped bead core were prepared. These tires were compared to similar tires having a circular bead core.

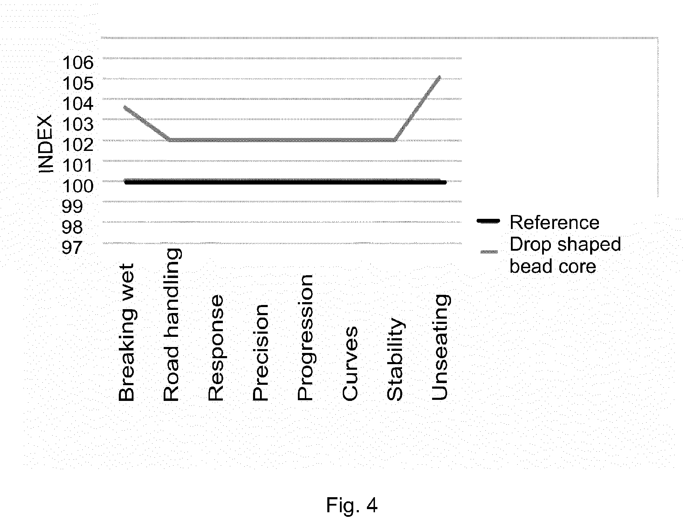

Summer braking wet, bare main road handling, response, precision, progression, power on/off in curves, stability, and bead unseating USA properties of each tire were measured. These results can be found in Table 1 and in Fig. 4.

**Table 1. Test results**

| | Summ er braking wet | Bare main road handlin 9 | Respo nse | Precisi on | Progre ssion | Power on/off in curves | Stabilit y | Bead Unseat ing USA |
|---|---|---|---|---|---|---|---|---|
| Referenc e | 100 | 100 | 100 | 100 | 100 | 100 | 100 | 100 |
| Drop shaped bead core + apex | 104 | 102 | 102 | 102 | 102 | 102 | 102 | 105 |

As can be seen from Table 1, bead unseating results of the novel tires were 5% better than bead unseating results of the reference tires. Further, summer braking wet results of the novel tires were 4% better than the summer braking wet results of the reference tires. Furthermore, as can be seen in Fig.4 and Table 1, several other properties of the novel tires, such as handling and stability, were also significantly improved compared to the reference tires.

The invention has been described with the aid of illustrations and examples. The invention is not limited solely to the above presented embodiments but may be modified within the scope of the appended claims.

## Claims

1. A method for manufacturing a pneumatic tire comprising a tread, sidewalls and a first bead (151) and a second bead (152), which beads (151, 152) are spaced apart, the first bead and the second bead comprising
- a drop shaped bead core (10) which is formed by using wire(s), the drop shaped bead core (10) having a cross sectional area (A10) comprising or consisting of a circular portion (10a) and a tapering portion (10b), the cross sectional area (A10) of the drop shaped bead core being in a range between 10 mm² and 100 mm², and
- an apex (20) positioned adjacent and/or against the bead core, the apex comprising a rubber and a resin,
the method comprising:
- connecting the apex to the drop shaped bead core, thereby obtaining an assembly comprising the drop shaped bead core and the apex,
- pre-forming a tire comprising said assembly, and
- vulcanizing the pre-formed tire, thereby obtaining the pneumatic tire.

2. A pneumatic tire (100) comprising
- a tread (120),
- sidewalls (145), and
- a first bead (151) and a second bead (152), which beads (151, 152) are spaced apart,
wherein
- the first bead (151) has a first mounting surface, and the second bead (152) has a second mounting surface, which mounting surfaces are adapted for mounting the tire on a rim of a wheel,
**characterized in that** each bead (151, 152) comprises an assembly comprising
- a drop shaped bead core (10) which is formed by using wire(s), the drop shaped bead core (10) having a cross sectional area (A10) comprising or consisting of a circular portion (10a) and a tapering portion (10b), the cross sectional area (A10) of the drop shaped bead core being in a range between 10 mm² and 100 mm², and
- an apex (20) positioned adjacent and/or against the bead core, the apex comprising a rubber and a resin.

3. The method according to claim 1, or the pneumatic tire according to claim 2, wherein the apex (20) is connected to one side of the tapering portion (10b) of the bead core (10).

4. The method according to claim 1 or 3, or the pneumatic tire according to claim 2 or 3, wherein the apex (20) is connected to two sides of the tapering portion (10b) of the bead core (10).

5. The method according to claim 1, 3 or 4, or the pneumatic tire according to any of the preceding claims 2 to 4, wherein the bead core (10) has a core height (10L) in a range between 4.5 mm and 15 mm, determined as a maximum height of the cross sectional area of the bead core (10).

6. The method according to claim 1 or any one of 3 to 5, or the pneumatic tire according to any of the preceding claims 2 to 5, wherein the bead core (10) has a core width (10W) in a range between 4 mm and 10 mm, determined as a maximum width of the cross sectional area of the bead core (10).

7. The method according to claim 1 or any one of 3 to 6, or the pneumatic tire according to any of the preceding claims 2 to 6, wherein core width (10W) of the bead core (10) is equal to or less than 0.8 times core height (10L) of the bead core, determined from the cross sectional area of the bead core.

8. The method according to claim 1 or any one of 3 to 7, or the pneumatic tire according to any of the preceding claims 2 to 7, wherein a height (20L) of the apex (20), determined as a maximum height of the cross sectional area of the apex, is in a range between 5 mm and 75 mm, preferably in a range between 10 mm and 70 mm.

9. The method according to claim 1 or any one of 3 to 8, or the pneumatic tire according to any of the preceding claims 2 to 8, wherein a maximum width (20W) of the apex is in a range between 5 mm and 15 mm, determined as a maximum width of the cross sectional area of the apex (20).

10. The method according to claim 1 or any one of 3 to 9, or the pneumatic tire according to any of the preceding claims 2 to 9, wherein a cross sectional area of the apex is in a range between 15 mm² and 350 mm².

11. The method according to claim 1 or any one of 3 to 10, or the pneumatic tire according to any of the preceding claims 2 to 10, wherein the bead core comprises a wire having a diameter in a range between 0.5 mm and 2 mm.

12. The method according to claim 1 or any one of 3 to 11, or the pneumatic tire according to any of the preceding claims 2 to 11, wherein Shore A hardness value of the apex is in a range between 86 and 99, determined according to standard ASTM D2240.

13. The method according to claim 1 or any one of 3 to 12, or the pneumatic tire according to any of the preceding claims 2 to 12, wherein the apex comprises
- a rubber,
- a carbon black,
- a phenolic resin, and
- optionally, a methylene-donor.

14. The method according to claim 1 or any one of 3 to 13, or the pneumatic tire according to any of the preceding claims 2 to 13, wherein the assembly has a drop shaped cross sectional area comprising a circular portion and a tapering portion.

## Patentansprüche

1. Verfahren zur Herstellung eines Luftreifens, der eine Lauffläche, Seitenwände und einen ersten Wulst (151) und einen zweiten Wulst (152) umfasst, wobei die Wulste (151, 152) voneinander beabstandet sind, wobei der erste Wulst und der zweite Wulst Folgendes umfassen
- einen tropfenförmigen Wulstkern (10), der unter Verwendung von Drähten geformt ist, wobei der tropfenförmige Wulstkern (10) eine Querschnittsfläche (A10) aufweist, die einen kreisförmigen Abschnitt (10a) und einen sich verjüngenden Abschnitt (10b) umfasst oder daraus besteht, wobei die Querschnittsfläche (A10) des tropfenförmigen Wulstkerns in einem Bereich zwischen 10 mm² und 100 mm² liegt, und
- einen Kernreiter (20), der neben und/oder gegen den Wulstkern positioniert ist, wobei der Kernreiter aus Gummi und Harz besteht,
wobei das Verfahren Folgendes umfasst:
- Verbinden des Kernreiters mit dem tropfenförmigen Wulstkern, wodurch eine Anordnung erhalten wird, die den tropfenförmigen Wulstkern und den Kernreiter umfasst,
- Vorformen eines Reifens, der die Anordnung umfasst, und
- Vulkanisieren des vorgeformten Reifens, wodurch der Luftreifen erhalten wird.

2. Luftreifen (100) umfassend
- eine Lauffläche (120),
- Seitenwände (145), und
- einen ersten Wulst (151) und einen zweiten Wulst (152), wobei die Wulste (151, 152) voneinander beabstandet sind,
wobei
- der erste Wulst (151) eine erste Montagefläche aufweist und der zweite Wulst (152) eine zweite Montagefläche aufweist, wobei die Montageflächen für die Montage des Reifens auf einer Felge eines Rades geeignet sind,
**dadurch gekennzeichnet, dass** jeder Wulst (151, 152) eine Anordnung umfasst, die Folgendes umfasst
- einen tropfenförmigen Wulstkern (10), der unter Verwendung von Drähten geformt ist, wobei der tropfenförmige Wulstkern (10) eine Querschnittsfläche (A10) aufweist, die einen kreisförmigen Abschnitt (10a) und einen sich verjüngenden Abschnitt (10b) umfasst oder daraus besteht, wobei die Querschnittsfläche (A10) des tropfenförmigen Wulstkerns in einem Bereich zwischen 10 mm² und 100 mm² liegt, und
- einen Kernreiter (20), der neben und/oder gegen den Wulstkern positioniert ist, wobei der Kernreiter aus Gummi und Harz besteht.

3. Verfahren nach Anspruch 1 oder Luftreifen nach Anspruch 2, wobei der Kernreiter (20) mit einer Seite des sich verjüngenden Abschnitts (10b) des Wulstkerns (10) verbunden ist.

4. Verfahren nach Anspruch 1 oder 3 oder Luftreifen nach Anspruch 2 oder 3, wobei der Kernreiter (20) mit zwei Seiten des sich verjüngenden Abschnitts (10b) des Wulstkerns (10) verbunden ist.

5. Verfahren nach Anspruch 1, 3 oder 4 oder Luftreifen nach einem der vorhergehenden Ansprüche 2 bis 4, wobei der Wulstkern (10) eine Kernhöhe (10L) in einem Bereich zwischen 4,5 mm und 15 mm aufweist, die als maximale Höhe der Querschnittsfläche des Wulstkerns (10) bestimmt wird.

6. Verfahren nach Anspruch 1 oder einem der Ansprüche 3 bis 5 oder Luftreifen nach einem der vorhergehenden Ansprüche 2 bis 5, wobei der Wulstkern (10) eine Kernbreite (10W) in einem Bereich zwischen 4 mm und 10 mm aufweist, die als maximale Breite der Querschnittsfläche des Wulstkerns (10) bestimmt wird.

7. Verfahren nach Anspruch 1 oder einem der Ansprüche 3 bis 6 oder Luftreifen nach einem der vorhergehenden Ansprüche 2 bis 6, wobei die Kernbreite (10W) des Wulstkerns (10) gleich oder kleiner als das 0,8-fache der Kernhöhe (10L) des Wulstkerns ist, bestimmt aus der Querschnittsfläche des Wulstkerns.

8. Verfahren nach Anspruch 1 oder einem der Ansprüche 3 bis 7 oder Luftreifen nach einem der vorhergehenden Ansprüche 2 bis 7, wobei eine Höhe (20L) des Kernreiters (20), bestimmt als maximale Höhe der Querschnittsfläche des Kernreiters, in einem Bereich zwischen 5 mm und 75 mm, vorzugsweise in einem Bereich zwischen 10 mm und 70 mm liegt.

9. Verfahren nach Anspruch 1 oder einem der Ansprüche 3 bis 8 oder Luftreifen nach einem der vorhergehenden Ansprüche 2 bis 8, wobei eine maximale Breite (20W) des Kernreiters in einem Bereich zwischen 5 mm und 15 mm liegt, bestimmt als maximale Breite der Querschnittsfläche des Kernreiters (20).

10. Verfahren nach Anspruch 1 oder einem der Ansprüche 3 bis 9 oder Luftreifen nach einem der vorhergehenden Ansprüche 2 bis 9, wobei eine Querschnittsfläche des Kernreiters in einem Bereich zwischen 15 mm² und 350 mm² liegt.

11. Verfahren nach Anspruch 1 oder einem der Ansprüche 3 bis 10 oder Luftreifen nach einem der vorhergehenden Ansprüche 2 bis 10, wobei der Wulstkern einen Draht mit einem Durchmesser im Bereich zwischen 0,5 mm und 2 mm umfasst.

12. Verfahren nach Anspruch 1 oder einem der Ansprüche 3 bis 11 oder Luftreifen nach einem der vorhergehenden Ansprüche 2 bis 11, wobei der Shore-A-Härtewert des Kernkerns im Bereich zwischen 86 und 99 liegt, bestimmt nach Standard ASTM D2240.

13. Verfahren nach Anspruch 1 oder einem der Ansprüche 3 bis 12 oder Luftreifen nach einem der vorhergehenden Ansprüche 2 bis 12, wobei der Kernreiter
- einen Gummi,
- einen Ruß,
- ein Phenolharz, und
- optional einen Methylendonator umfasst.

14. Verfahren nach Anspruch 1 oder einem der Ansprüche 3 bis 13 oder Luftreifen nach einem der vorhergehenden Ansprüche 2 bis 13, wobei die Anordnung einen tropfenförmigen Querschnitt aufweist, der einen kreisförmigen Abschnitt und einen sich verjüngenden Abschnitt umfasst.

## Revendications

1. Procédé de manufacture d'un pneumatique comprenant une bande de roulement, des flancs et un premier bourrelet (151) et un second bourrelet (152), lesquels bourrelets (151, 152) sont espacés, le premier bourrelet et le second bourrelet comprenant
- une tringle en forme de goutte (10) qui est formée à l'aide d'un ou de plusieurs fils, la tringle en forme de goutte (10) ayant une surface de section transversale (A10) comprenant ou constituée d'une partie circulaire (10a) et d'une partie conique (10b), la surface de section transversale (A10) de la tringle en forme de goutte se situant dans une plage comprise entre 10 mm² et 100 mm², et
- un bourrage sur tringle (20) positionné adjacent à la tringle et/ou contre celle-ci, le bourrage sur tringle comprenant un caoutchouc et une résine,
le procédé comprenant :
- la connexion du bourrage sur tringle à la tringle en forme de goutte, permettant ainsi d'obtenir un ensemble comprenant la tringle en forme de goutte et le bourrage sur tringle,
- le préformage d'un pneumatique comprenant ledit ensemble, et
- la vulcanisation du pneu préformé, permettant ainsi d'obtenir le pneumatique.

2. Pneumatique (100) comprenant
- une bande de roulement (120),
- des flancs (145), et
- un premier bourrelet (151) et un second bourrelet (152), lesquels bourrelets (151, 152) sont espacés,
dans lequel
- le premier bourrelet (151) a une première surface de montage, et le second bourrelet (152) a une seconde surface de montage, lesquelles surfaces de montage sont adaptées pour monter le pneu sur une jante d'une roue,
**caractérisé en ce que** chaque bourrelet (151, 152) comprend un ensemble comprenant
- une tringle en forme de goutte (10) qui est formée à l'aide d'un ou de plusieurs fils, la tringle en forme de goutte (10) ayant une surface de section transversale (A10) comprenant ou constituée d'une partie circulaire (10a) et d'une partie conique (10b), la surface de section transversale (A10) de la tringle en forme de goutte se situant dans une plage comprise entre 10 mm² et 100 mm², et
- un bourrage sur tringle (20) positionné adjacent à la tringle et/ou contre celle-ci, le bourrage sur tringle comprenant un caoutchouc et une résine.

3. Procédé selon la revendication 1, ou pneumatique selon la revendication 2, dans lequel le bourrage sur tringle (20) est relié à un côté de la partie conique (10b) de la tringle (10).

4. Procédé selon la revendication 1 ou 3, ou pneumatique selon la revendication 2 ou 3, dans lequel le bourrage sur tringle (20) est relié à deux côtés de la partie conique (10b) de la tringle (10).

5. Procédé selon la revendication 1, 3 ou 4, ou pneumatique selon l'une quelconque des revendications précédentes 2 à 4, dans lequel la tringle (10) a une hauteur centrale (10L) dans une plage comprise entre 4,5 mm et 15 mm, déterminée comme une hauteur maximale de la surface de section transversale de la tringle (10).

6. Procédé selon la revendication 1 ou l'une quelconque des revendications 3 à 5, ou pneumatique selon l'une quelconque des revendications précédentes 2 à 5, dans lequel la tringle (10) a une largeur principale (10W) dans une plage comprise entre 4 mm et 10 mm, déterminée comme une largeur maximale de la surface de section transversale de la tringle (10).

7. Procédé selon la revendication 1 ou l'une quelconque des revendications 3 à 6, ou pneumatique selon l'une quelconque des revendications précédentes 2 à 6, dans lequel la largeur centrale (10W) de la tringle (10) est égale ou inférieure à 0,8 fois la hauteur centrale (10L) de la tringle, déterminée à partir de la surface de section transversale de la tringle.

8. Procédé selon la revendication 1 ou l'une quelconque des revendications 3 à 7, ou pneumatique selon l'une quelconque des revendications précédentes 2 à 7, dans lequel une hauteur (20L) du bourrage sur tringle (20), déterminée comme une hauteur maximale de la surface de section transversale du bourrage sur tringle, est comprise entre 5 mm et 75 mm, de préférence entre 10 mm et 70 mm.

9. Procédé selon la revendication 1 ou l'une quelconque des revendications 3 à 8, ou pneumatique selon l'une quelconque des revendications précédentes 2 à 8, dans lequel une largeur maximale (20W) du bourrage sur tringle se situe dans une plage comprise entre 5 mm et 15 mm, déterminée comme une largeur maximale de la surface de section transversale du bourrage sur tringle (20).

10. Procédé selon la revendication 1 ou l'une quelconque des revendications 3 à 9, ou pneumatique selon l'une quelconque des revendications précédentes 2 à 9, dans lequel une surface de section transversale du bourrage sur tringle se situe dans une plage comprise entre 15 mm² et 350 mm².

11. Procédé selon la revendication 1 ou l'une quelconque des revendications 3 à 10, ou pneumatique selon l'une quelconque des revendications précédentes 2 à 10, dans lequel la tringle comprend un fil ayant un diamètre compris entre 0,5 mm et 2 mm.

12. Procédé selon la revendication 1 ou l'une quelconque des revendications 3 à 11, ou pneumatique selon l'une quelconque des revendications précédentes 2 à 11, dans lequel la valeur de dureté Shore A du bourrage sur tringle se situe dans une plage comprise entre 86 et 99, déterminée selon la norme ASTM D2240.

13. Procédé selon la revendication 1 ou l'une quelconque des revendications 3 à 12, ou pneumatique selon l'une quelconque des revendications précédentes 2 à 12, dans lequel le bourrage sur tringle comprend
- un caoutchouc,
- un noir de carbone,
- une résine phénolique, et
- éventuellement, un donneur de méthylène.

14. Procédé selon la revendication 1 ou l'une quelconque des revendications 3 à 13, ou pneumatique selon l'une quelconque des revendications précédentes 2 à 13, dans lequel l'ensemble a une surface de section transversale en forme de goutte comprenant une partie circulaire et une partie conique.
